# EUROPÄISCHE PATENTSCHRIFT

(11) **EP 1 342 932 B1**
(45) Veröffentlichungstag und Bekanntmachung des Hinweises auf die Patenterteilung: **16.04.2008**
(21) Anmeldenummer: 03004328.5
(22) Anmeldetag: 28.02.2003
(51) Int. Cl.: F16D 69/02, C04B 35/04, C04B 35/20, C04B 35/495, C04B 35/80, C04B 35/56, C04B 35/571

(54) **Keramische Werkstoffe für Reibbeläge**
Ceramic material for friction linings
Matériau céramique pour garnitures de friction

(30) Priorität: 07.03.2002 DE 10210175
(43) Veröffentlichungstag der Anmeldung: 10.09.2003
(73) Patentinhaber: AUDI AG, 85045 Ingolstadt (DE)
(72) Erfinder: Hüner, Ronald Dr., 86674 Baar (DE); Bauer, Moritz, 86153 Augsburg (DE); Winkelmann, Peter, 86672 Thierhaupten (DE)
(74) Vertreter: Deckers, Hellmuth Alexander

(56) Entgegenhaltungen:
- EP-A- 0 987 463
- WO-A-95/07418
- WO-A-02/070431
- DE-A- 19 727 585

## Beschreibung

Die Erfindung betrifft keramische Werkstoffe für Reibbeläge.

Bei der Suche nach geeigneten Bremsbelägen für Hochleistungsbremssysteme mit keramischen Bremsscheiben stoßen die konventionellen organisch gebundenen Bremsbelagszusammensetzungen wegen der auftretenden hohen Temperaturen und hohen Verschleißraten an ihre Grenzen. Dies wird insbesondere deutlich bei solchen Reibpaarungen, bei denen als Bremsscheibenmaterial C/SiC oder C/C-SiC verwendet wird. Bei diesen Werkstoffen handelt es sich um eine im wesentlichen aus Siliciumcarbid sowie Nebenphasen aus Silicium und Kohlenstoff gebildete Keramik, die mit Kohlenstoffasern verstärkt ist, wie beispielsweise in der DE-A 197 10 105 beschrieben. Diese Werkstoffe werden bekanntermaßen durch Infiltration von porösen C/C-Vorkörpern (mit Kohlenstoffasern verstärkter Kohlenstoff) mit flüssigem Silicium und Reaktion mindestens eines Teils des Kohlenstoffs mit diesem zu Siliciumcarbid hergestellt. Mit solchen Bremsscheiben treten an der Reibfläche während des Bremsvorgangs Temperaturen von 1000 °C und mehr auf, dabei können organisch gebundene Bremsbeläge zersetzt werden.

In der DE-A 197 27 587 wird das Problem der hohen Betriebstemperaturen beim Bremsvorgang in einer Kombination von Bremsscheiben aus einer kurzfaserverstärkten C/SiC-Keramik und einem Bremsbelag mit organisch gebundener Matrix dadurch gelöst, daß die Bremsscheibe so ausgelegt wird, daß ihre Wärmeleitfähigkeit senkrecht zur Scheibenoberfläche mindestens 20 W/m K beträgt. Durch diese hohe Wärmeleitfähigkeit können in Verbindung mit der Keramikbremsscheibe auch konventionelle, organisch gebundene Bremsbeläge eingesetzt werden. Die hierbei erzielten Standzeiten der Beläge sind jedoch nicht befriedigend.

Aus der DE-A 197 27 586 ist eine Kombination bekannt aus einer C/SiC-Bremsscheibe und einem dazu korrespondierenden C/SiC-Bremsbelag, wobei der C/C-Vorkörper des Bremsbelags eine höhere Dichte (niedrigere Porosität) aufweist als die oberflächennahen Bereiche des C/C-Vorkörpers der Bremsscheibe. Dies führt dazu, daß nach der Flüssigsilicierung des C/C-Vorkörpers des Bremsbelags wegen dessen niedrigeren Siliciumcarbid-Gehalts ein C/SiC mit geringerer Festigkeit gebildet wird. Insgesamt ist das Reib- und Verschleißverhalten, insbesondere das Komfortverhalten jedoch noch nicht befriedigend: es werden keine konstanten Reibwerte erhalten, die Geräuschentwicklung beim Bremsen ist zu hoch, und das Naßansprechverhalten ist ungünstig. Aus der DE-A 197 27 585 ist die Kombination aus einer kurzfaserverstärkten C/SiC-Keramikbremsscheibe und einem Bremsbelag aus einem Sintermetallwerkstoff oder einem anorganisch gebundenen Werkstoff mit keramischer Bindephase, die bevorzugt durch vollständige oder teilweise Pyrolyse mindestens eines präkeramischen Polymers erhältlich ist, und Metallpartikeln bekannt. Dieser Bremsbelag ist zwar thermisch hochbelastbar, jedoch ist auch dieses System hinsichtlich des Bremsverhaltens noch nicht zufriedenstellend. In der DE-A 197 11 830 ist ein Verfahren zur Herstellung von Reibbelägen zur Kombination mit Bremsscheiben aus faserverstärkter Keramik beschrieben, worin ein aus Kohlenstoff- und Metallpartikeln hergestellter Preßkörper gesintert wird.

Aufgabe der Erfindung ist es daher, Reibbeläge bereitzustellen, die in Kombination mit Reibkörpern oder Reibscheiben aus keramischen Materialien, insbesondere C/SiC-Keramik, eingesetzt werden können, die sich auch bei hohen Temperaturen nicht zersetzen sowie ein konstantes Reibverhalten und ein gutes Komfortverhalten bieten.

Gegenstand der vorliegenden Erfindung sind daher Reibbeläge aus einem Werkstoff bestehend im wesentlichen aus Metalloxiden, wobei die Metalloxide in Form einer gesinterten Keramik oder in Form von Keramik-Partikeln vorliegen, die durch Kohlenstoff und/oder Carbide gebunden werden, dadurch gekennzeichnet, daß der Massenanteil an Metalloxiden im Werkstoff mindestens 50 % beträgt, und daß die Kristallstruktur der Metalloxide ein Schichtgitter ist.

Bevorzugt liegt der Massenanteil an Metalloxiden in den Werkstoffen dieser Reibbeläge bei mindestens 60 % und insbesondere bei mindestens 70 %. Die Metalloxide können auch Mischoxide sein und enthalten bevorzugt mindestens ein Oxid der Elemente der Gruppe Ti, Zr, Al, B, Si, Ca und Mg. Die Metalloxide, die in Schichtgittern kristallisieren, besitzen aufgrund dieses kristallinen Aufbaus gute tribologische Eigenschaften. Sie werden im folgenden auch als "Schichtkeramik" bezeichnet. Bevorzugt werden als Schichtkeramik Magnesiumalumosilicate, insbesondere Talk, die hier auch als Metalloxide bezeichnet werden, und besonders bevorzugt Magnesiumoxid (MgO) eingesetzt. Auch bei diesen bevorzugten Materialien und dem besonders bevorzugten Magnesiumoxid werden Massenanteile von mindestens 50 % dieser Oxide mit denselben Vorzugsbereichen in dem Werkstoff des Reibbelags eingesetzt. Erfindungsgemäß enthalten die Reibbeläge weitere Zuschlagstoffe wie anorganische Binder, Reibwertmodifikatoren, Reibmittel oder Gleitstoffe, wobei die Summe der Massenanteile dieser Zuschlagstoffe in dem Reibbelag vorzugsweise unterhalb von 50 % liegt.

Ein weiterer Gegenstand der vorliegenden Erfindung sind thermisch hochbelastbare Reibsysteme, insbesondere Bremssysteme, umfassend Reibbeläge, deren Werkstoffe erfindungsgemäß im wesentlichen aus in Schichtgittern kristallisierenden Metalloxiden bestehen, und Bremsscheiben aus keramischen Werkstoffen, insbesondere solchen aus C/SiC- oder C/C-SiC-Werkstoffen. Bevorzugt werden die Reibbeläge in Form von Bremsbelägen für Bremsscheiben aus Keramik, insbesondere aus kohlenstoffaserverstärkter Nichtoxidkeramik, eingesetzt. Dabei ist die Keramik typischerweise fester und härter als das Belagsmaterial. Besonders bevorzugt werden die erfindungsgemäßen Reibbeläge als Bremsbeläge für Bremsscheiben aus C/SiC oder als Reibpartner für Kupplungskörper oder -scheiben aus C/SiC eingesetzt. Das Material der Reibbeläge ist besonders für keramische Gegenkörper mit hohem SiC-Gehalt von Vorteil und eignet sich besonders gut für solche Reibkörper, die zumindest in der Reibfläche einen Massenanteil an SiC von mindestens 60 % an der Zusammensetzung der Reibfläche aufweisen.

Ein weiterer Gegenstand der vorliegenden Erfindung ist die Verwendung der erfindungsgemäßen Reibbeläge in Kupplungssystemen und Bremssystemen für Schienenfahrzeuge, Flugzeuge und Kraftfahrzeuge, bevorzugt in Kombination mit Reibscheiben aus keramischen Werkstoffen, insbesondere solchen aus C/SiC- oder C/C-SiC-Werkstoffen.

Wird der Reibbelag im wesentlichen aus gesinterter Keramik aufgebaut, so wird der Zusammenhalt des Materials durch die oxidkeramische Bindung beim Sintern bewirkt. Werden statt dessen im wesentlichen vorgeformte keramische Partikel verwendet, so erfolgt die Bindung innerhalb des Reibmaterials erfindungsgemäß durch Kohlenstoff oder Carbide, die insbesondere während einer Temperatur- oder Carbonisierungsbehandlung gebildet werden. Insbesondere durch Kohlenstoff oder Carbide gebundene Reibbeläge auf der Basis von Magnesiumoxid haben sich überraschenderweise als sehr wirksam und thermisch beständig herausgestellt. Beimischungen von Kohlenstoff, Kupfer oder Zinn bevorzugt in Massenanteilen von bis zu 10 % und die anorganische

Bindung auf der Basis von carbonisierten organischen Vorläufern ("Präcursoren") für Pyrokohlenstoff wirken sich in positiver Weise auf den Reibwert, den Verschleiß und dies mechanische Beständigkeit von Metalloxid-basierenden Werkstoffen für Reibbeläge aus. Dabei betragen die Massenanteile von Kohlenstoff und/oder Carbiden in den Werkstoffen der Reibbeläge mindestens 5 %.

Zwar ist Magnesiumoxid als Zuschlagstoff in geringer Menge bis zu 20 % in Kombination mit Verstärkungsfasern, die nicht Asbest sind, organischen Füllstoffen und wärmehärtbaren Harzen für Bremsbelagszusammensetzungen aus der US 5,866,636 bekannt. Dabei erfüllt das MgO im Materialverbund dieser Bremsbeläge die Aufgabe, Ablagerungen auf der Bremsscheibe zu entfernen und dadurch niederfrequente Geräusche beim Bremsen zu unterdrücken. Höhere Gehalte an MgO führen zu stärkerer Dämpfung der niederfrequenten Bremsgeräusche, niedrigere Gehalte zu geringerem Verschleiß des Reibpartners und zu höherem Widerstand gegen Fading. Aus diesen gegenläufigen Anforderungen ergibt sich ein gewünschter Volumenanteil von 3 bis 20 % für das MgO. Es ist nicht offenbart, daß man derartige Belagszusammensetzungen mit Keramik-Bremsscheiben zusammen verwenden kann. Aus den in der Einleitung dargelegten Gründen, insbesondere wegen der hohen Betriebstemperaturen, können organisch gebundene Belagsmaterialien ohnehin nur in besonderen Fällen, wie in der DE-A 197 27 586 beschrieben, eingesetzt werden.

Im Zusammenwirken mit Reibscheiben, insbesondere Bremsscheiben aus keramischen Werkstoffen hat sich jedoch überraschenderweise für Bremsbeläge die Verwendung von Werkstoffen mit hohen Massenanteilen, nämlich mindestens 50 %, bevorzugt mindestens 60 %, und besonders bevorzugt mindestens 70 % an in Schichtgittern kristallisierenden Metalloxiden, bevorzugt aus harter gesinterter Schichtkeramik, insbesondere MgO, als besonders vorteilhaft erwiesen. So liegen sowohl die Härte dieser Werkstoffe und die damit verbundene Verschleißbeständigkeit als auch die hervorragenden Gleiteigenschaften der Schichtkeramiken auf einem günstigen Niveau und machen sie geeignet für die Kombination mit Bremsscheiben aus keramischen Werkstoffen.

Ein weiterer Vorteil bei der Verwendung von in Schichtgittern kristallisierenden Metalloxiden und diese enthaltenden Keramiken als Hauptkomponente von Reibmaterialien in Bremsbelägen ist deren vergleichsweise geringe thermische Leitfähigkeit. Da die in der Kontaktschicht der Reibpaarung beim Reiben entstehende

Wärme vom Bremsschuh oder Bremssattel ferngehalten werden muß, sich aber bei keramischen Bremsscheiben während des Bremsvorgangs hohe Temperaturen um 1000 °C und darüber entwickeln, ist die thermische Isolationswirkung der in Schichtgittern kristallisierenden Metalloxide günstig.

Die tribologischen Eigenschaften der Reibpaarung werden durch die Art der anorganischen Binderphase des Reibmaterials wesentlich beeinflußt. Im Unterschied zu konventionell organisch gebundenen Reibmaterialien werden die in Schichtgittern kristallisierenden Metalloxide und die weiteren Zuschlagstoffe durch eine oxidkeramische Bindung oder durch Phasen von Kohlenstoff und/oder Carbiden gebunden. Die Binderphase wird also von thermisch stabilen Verbindungen gebildet, die bei den Anwendungstemperaturen nicht zersetzt werden. Die anorganische Binderphase bildet sich typischerweise bei der thermischen Behandlung des Grünkörpers des Reibmaterials.

Ein weiterer Gegenstand der vorliegenden Erfindung ist ein angepaßtes Verfahren zur Herstellung der Werkstoffe für die Reibbeläge.

In der Variante mit anorganischer Bindung über Kohlenstoff und/oder Carbide wird in einem ersten Schritt eine formbare Mischung aus pulverförmigen in Schichtgittern kristallisierenden Metalloxiden, Zuschlagstoffen und organischen Bindern hergestellt. Hierauf wird die Mischung z. B. durch Pressen in die gewünschte Form gebracht und mit Hilfe der wärmehärtenden organischen Binder ausgehärtet. Der so erzeugte Grünkörper wird carbonisiert, das heißt thermisch behandelt, um die flüchtigen Bestandteile der organischen Komponenten abzuspalten. Dies geschieht nach den üblichen Verfahren, im allgemeinen bei Temperaturen oberhalb von 650 °C und unter Ausschluß von Luftsauerstoff. Die organischen Binder haben die Aufgabe, den geformten Körper zu verfestigen und sich bei der Carbonisierung in Kohlenstoff oder durch Weiterreaktion in Carbide umzuwandeln, die dann die anorganische Binderphase bilden. Daher sind solche organischen Binder bevorzugt, die bei der Carbonisierung eine hohe Kohlenstoffausbeute ergeben, wie Phenolharze, Melaminharze, Polyimide, Peche, Epoxidharze oder Polyurethane. Soll die anorganische Binderphase neben Kohlenstoff auch Carbide enthalten, dann werden diese erfindungsgemäß bevorzugt während der thermischen Behandlung des Grünkörpers aus den Zersetzungsprodukten der organischen Binder und Zusätzen von carbidbildenden Metall gebildet. Die carbidbildenden Metalle umfassen bevorzugt mindestens eines der Metalle aus der Gruppe Si, Ti, Fe, Ni und Cr. Besonders bevorzugt wird während der Temperaturbehandlung eine anorganische Binderphase aus Siliciumcarbid gebildet. Die Wärmebehandlung wird hierbei typischerweise bei Temperaturen von mindestens 1200 °C durchgeführt. Die in der Mischung eingesetzte Menge an organischem Binder und gegebenenfalls dem Metallzusatz wird so gewählt, daß nach der Carbonisierung beziehungsweise Carbidbildung im Reibmaterial die Summe der Massenanteile von Kohlenstoff und Carbiden im Bereich von 5 bis 50 % ist. Bevorzugt liegt der Massenanteil bei mindestens 10 % und besonders bevorzugt bei mindestens 15 %. Die Verwendung dieser Binderphase hat den Vorteil, daß der gebildete Kohlenstoff zusätzlich als Reibwertmodifikator (Senkung des Reibungskoeffizienten) und die Carbide als Reibwertmodifikator oder Reibmittel (Erhöhung des Reibungskoeffizienten) fungieren können.

In der Variante mit der oxidkeramischen Bindung wird nach den in der keramischen Industrie gängigen Formgebungs- und Sinterverfahren ein keramischer Körper hergestellt. Die Zuschlagstoffe des Reibmaterials werden dabei üblicherweise vor der Sinterbehandlung bei bis zu ca. 1000 bis ca. 1500 °C, je nach der Natur der Metalloxide, zugegeben. Typische Zusammensetzungen weisen Massenanteile von Metalloxiden von mindestens 50 % und bevorzugt von mindestens 70 % auf.

Obwohl formal zwischen der oxidkeramischen und der Bindung über Kohlenstoff oder Carbide unterschieden wird, ist es auch möglich, Mischformen dieser beiden Bindungsarten in demselben Werkstoff zu realisieren. Dies ist beispielsweise dann der Fall, wenn als Zuschlagstoff Kohlenstoff oder Carbide bildende Substanzen gemeinsam mit solchen Metalloxiden zugegeben werden, die niedriger schmelzen als MgO oder bereits bei Temperaturen deutlich unter der Schmelztemperatur von MgO sintern. Vorteilhafterweise liegt der Massenanteil an Kohlenstoff und/oder an Carbiden in dem erfindungsgemäßen Werkstoff bei mindestens 5 %. Gegebenenfalls können hierzu Kohlenstoff und/oder Carbide, insbesondere Graphit oder Siliciumcarbid bereits als Zuschlagstoffe in die Ausgangsmischungen zugegeben werden.

In einer weiteren vorteilhaften Ausgestaltung der Erfindung enthalten die erfindungsgemäßen Reibbeläge Fasern oder Whisker als Zuschlagstoff. Sie können als Verstärkungskomponente für den Werkstoff oder als Modifikatoren des Reibverhaltens wirken. Typischerweise werden hierbei Kohlenstoffasern, temperaturbeständige Polymerfasern, Whisker aus Metallen oder Verbindungen wie Oxiden, Boriden, Carbiden oder Nitriden, Metallfasern oder -späne in Volumenanteilen bis zu 35 % eingesetzt. Als besonders vorteilhaft haben sich hierbei Kohlenstoffasern in Massenanteilen von 10 bis 30 % erwiesen, da sie gute Verstärkungswirkung und gute tribologische Eigenschaften vereinen. Unter den Polymerfasern eignen sich insbesondere Aramidfasern, Acrylfasern, und Cellulosefasern. Als Metallfasern werden typischerweise Fasern aus Stahl, Kupfer oder Kupferlegierungen verwendet.

In den erfindungsgemäßen Reibbelägen können noch weitere Zuschlagstoffe eingesetzt werden, nämlich Reibwertmodifikatoren wie Cu, Sn, Sb, MnS, Sb₂O₃ und SnO oder Schmierstoffe wie MoS₂, Graphit und Bornitrid, oder Reibmittel wie Al₂O₃, ZrO₂, ZrSiO₄, SiC und SiO₂ jeweils in geringen Mengen. Darunter werden solche Mengen verstanden, daß der Massenanteil der betreffenden Zuschlagstoffe jeweils maximal 5 % der Masse des Reibbelags beträgt.

## Patentansprüche

1. Keramische Reibbeläge aus einem Werkstoff bestehend im wesentlichen aus Metalloxiden, wobei die Metalloxide in Form einer gesinterten Keramik oder in Form von Keramik-Partikeln vorliegen, die durch Kohlenstoff und/oder Carbide gebunden werden, **dadurch gekennzeichnet, daß** der Werkstoff einen Massenanteil von mindestens 50 % an Metalloxiden ausweist, und daß die Kristallstruktur der Metalloxide ein Schichtgitter ist.

2. Keramische Reibbeläge nach Anspruch 1, **dadurch gekennzeichnet, daß** die Metalloxide ausgewählt sind aus Oxiden mindestens eines der Metalle der Gruppe Ti, Zr, Al, B, Si, Ca und Mg.

3. Keramische Reibbeläge nach Anspruch 1, **dadurch gekennzeichnet, daß** die Metalloxide ausgewählt sind aus Magnesiumalumosilicaten, Talk und Magnesiumoxid.

4. Keramische Reibbeläge nach Anspruch 1, **dadurch gekennzeichnet, daß** sie einen Massenanteil von mindestens 50 % an Magnesiumoxid aufweisen.

5. Keramische Reibbeläge nach Anspruch 4, **dadurch gekennzeichnet, daß** das Magnesiumoxid durch Kohlenstoff oder Carbide gebunden ist.

6. Keramische Reibbeläge nach Anspruch 1, **dadurch gekennzeichnet, daß** sie Carbide von Metallen der Gruppe Si, Ti, Fe, Ni und Cr einzeln oder in Mischung enthalten.

7. Keramische Reibbeläge nach Anspruch 6, **dadurch gekennzeichnet, daß** Siliciumcarbid enthalten ist.

8. Keramische Reibbeläge nach Anspruch 1, **dadurch gekennzeichnet, daß** weitere Zuschlagstoffe ausgewählt aus anorganischen Bindern, Reibwertmodifikatoren, Reibmitteln und Gleitstoffen enthalten sind, wobei die Summe der Massenanteile der Zuschlagstoffe in den Werkstoffen unterhalb von 50 % liegt.

9. Keramische Reibbeläge nach Anspruch 1, **dadurch gekennzeichnet, daß** die Werkstoffe temperaturbeständige Fasern oder Whisker in einem Volumenanteil von bis zu 35 % enthalten.

10. Keramische Reibbeläge nach Anspruch 9, **dadurch gekennzeichnet, daß** die Fasern ausgewählt sind aus Aramidfasern, Acrylfasern, Cellulosefasern, Kohlenstoffasern und Metallfasern aus Stahl, Kupfer oder dessen Legierungen.

11. Keramische Reibbeläge nach Anspruch 10, **dadurch gekennzeichnet, daß** die Werkstoffe einen Massenanteil von 10 % bis 30 % an Kohlenstoffasern aufweisen.

12. Keramische Reibbeläge nach Anspruch 8, **dadurch gekennzeichnet, daß** die Reibwertmodifikatoren ausgewählt sind aus Kupfer, Zinn, Antimon, Mangan(II)sulfid, Antimontrioxid und Zinn(II)oxid.

13. Keramische Reibbeläge nach Anspruch 8, **dadurch gekennzeichnet, daß** die Reibmittel ausgewählt sind aus Aluminiumoxid, Zirkondioxid, Zirkon (ZrSiO₄), Siliciumcarbid und Siliciumdioxid

14. Keramische Reibbeläge nach Anspruch 8, **dadurch gekennzeichnet, daß** die Gleitstoffe ausgewählt sind aus Molybdändisulfid, Graphit und Bornitrid.

15. Keramische Reibbeläge nach Anspruch 1, **dadurch gekennzeichnet, daß** sie Beimischungen von Kohlenstoff, Kupfer oder Zinn enthalten.

16. Thermisch hochbelastbare Reibsysteme umfassend Reibbeläge nach Anspruch 1 und Reibkörper aus keramischen Werkstoffen.

17. Reibsysteme nach Anspruch 16, **dadurch gekennzeichnet, daß** die Reibkörper C/SiC- oder C/C-SiC-Werkstoffe enthalten.

18. Verwendung von Reibsystemen nach Anspruch 16 als Bremssystem.

19. Verwendung von Reibsystemen nach Anspruch 17 als Bremssystem.

20. Verwendung von Reibsystemen nach Anspruch 16 als Kupplungssystem.

21. Verwendung von Reibsystemen nach Anspruch 17 als Kupplungssystem.

22. Verwendung gemäß Anspruch 18 in Schienenfahrzeugen, Flugzeugen oder Kraftfahrzeugen.

23. Verwendung gemäß Anspruch 19 in Kraftfahrzeugen.

24. Verfahren zur Herstellung von Reibbelägen nach Anspruch 1, **dadurch gekennzeichnet, daß**
- in einem ersten Schritt eine formbare Mischung aus pulverförmigen Metalloxiden, die in Schichtgitterstruktur kristallisiert sind, Zuschlagstoffen und wärmehärtenden organischen Bindern hergestellt wird,
- in einem zweiten Schritt die Mischung durch Pressen in die gewünschte Form gebracht und
- in einem dritten Schritt die geformte Mischung mit Hilfe der wärmehärtenden organischen Binder ausgehärtet wird, und
- in einem vierten Schritt der so erzeugte Grünkörper bei Temperaturen oberhalb von 650 °C und unter Ausschluß von Luftsauerstoff carbonisiert wird.

25. Verfahren nach Anspruch 24, **dadurch gekennzeichnet, daß** der formbaren Mischung Metalle ausgewählt aus der Gruppe Si, Ti, Fe, Ni und Cr zugesetzt werden, wobei diese im vierten Schritt mit dem bei der Carbonisierung erzeugten Kohlenstoff Carbide bilden.

26. Verfahren nach Anspruch 25, **dadurch gekennzeichnet, daß** die Metalle in einer solchen Menge eingesetzt werden, daß die Summe der Massenanteile von Kohlenstoff und Carbiden in dem den Reibbelag bildenden Werkstoff im Bereich von 5 % bis 50 % ist.

27. Verfahren zur Herstellung von Reibbelägen nach Anspruch 1, **dadurch gekennzeichnet, daß**
- in einem ersten Schritt eine formbare Mischung aus pulverförmigen Metalloxiden, Zuschlagstoffen und gegebenenfalls organischen Plastifizierungsmitteln hergestellt wird,
- in einem zweiten Schritt die Mischung durch Pressen in die gewünschte Form gebracht und
- in einem dritten Schritt die geformte Mischung bei Temperaturen von ca. 1000 °C bis ca. 1500 °C gegebenenfalls unter Druck gesintert wird.

## Claims

1. A ceramic friction lining comprising a material consisting essentially of metal oxides which are present in the form of a sintered ceramic or in the form of ceramic particles bound by carbon and/or carbides, wherein the material has a mass fraction of at least 50 % of metal oxides, and wherein the crystal structure of the metal oxides is a layer lattice.

2. A ceramic friction lining as claimed in claim 1, wherein the metal oxides are selected from among oxides of at least one of the metals of the group consisting of Ti, Zr, Al, B, Si, Ca and Mg.

3. A ceramic friction lining as claimed in claim 1, wherein the metal oxides are selected from among magnesium aluminosilicates, talc and magnesium oxide.

4. A ceramic friction lining as claimed in claim 1 which has a mass fraction of at least 50 % of magnesium oxide.

5. A ceramic friction lining as claimed in claim 4, wherein the magnesium oxide is bound by carbon or carbides.

6. A ceramic friction lining as claimed in claim 1 which comprises carbides of metals of the group consisting of Si, Ti, Fe, Ni and Cr either individually or in admixture with one another.

7. A ceramic friction lining as claimed in claim 6 in which silicon carbide is present.

8. A ceramic friction lining as claimed in claim 1 in which further additives selected from among inorganic binders, substances which modify the coefficient of friction, friction promoters and lubricants are present, with the sum of the mass fractions of the additives in the materials being below 50 %.

9. A ceramic friction lining as claimed in claim 1, wherein the materials comprise heat-resistant fibers or whiskers in a volume fraction of up to 35 %.

10. A ceramic friction lining as claimed in claim 9, wherein the fibers are selected from among aramid fibers, acrylic fibers, cellulose fibers, carbon fibers and metal fibers or steel, copper or its alloys.

11. A ceramic friction lining as claimed in claim 10, wherein the materials have a mass fraction of from 10 to 30 % of carbon fibers.

12. A ceramic friction lining as claimed in claim 8, wherein the substances which modify the coefficient of friction are selected from among copper, tin, antimony, manganese(II) sulfide, antimony trioxide and tin(II) oxide.

13. A ceramic friction lining as claimed in claim 8, wherein the friction promoters are selected from among aluminum oxide, zirconium dioxide, zircon (ZrSiO₄), silicon carbide and silicon dioxide.

14. A ceramic friction lining as claimed in claim 8, wherein the lubricants are selected from among molybdenum disulfide, graphite and boron nitride.

15. A ceramic friction lining as claimed in claim 1 which contains additions of carbon, copper or tin.

16. A friction system capable of withstanding high temperatures comprising friction linings as claimed in claim 1 and friction bodies made of ceramic materials.

17. A friction system as claimed in claim 16, wherein the friction bodies comprise C/SiC or C/C-SiC materials.

18. The use of a friction system as claimed in claim 16 as brake system.

19. The use of a friction system as claimed in claim 17 as a brake system.

20. The use of a friction system as claimed in claim 16 as clutch system.

21. The use of a friction system as claimed in claim 17 as a clutch system.

22. The use as claimed in claim 18 in rail vehicles, aircraft or motor vehicles.

23. The use as claimed in claim 19 in motor vehicles.

24. A process for producing a friction lining as claimed in claim 1, wherein
- a shapable mixture of pulverulent metal oxides which are crystallised in a layer lattice structure, additives and thermally curing organic binders is produced in a first step,
- the mixture is brought into the desired shape by pressing in a second step and
- the shaped mixture is cured with the aid of the thermally curing organic binders in a third step, and
- the green body produced in this way is carbonised in a fourth step at temperatures above 650 °C and in the absence of atmospheric oxygen.

25. The process as claimed in claim 24, wherein metals selected from the group consisting of Si, Ti, Fe, Ni and Cr are added to the mixture and form carbides in the fourth step with the carbon produced in the carbonization.

26. The process as claimed in claim 25, wherein the metals are used in such an amount that the sum of the mass fractions of carbon and carbides in the material forming the friction lining is in the range from 5 to 50 %.

27. A process for producing a friction lining as claimed in claim 1, wherein
- a shapable mixture of pulverulent metal oxides, additives and, if desired, organic plasticizers is produced in a first step,
- the mixture is brought into the desired shape by pressing in a second step and
- the shaped mixture is sintered in a third step at temperatures of from about 1 000 °C to about 1 500 °C, if desired under pressure.

## Revendications

1. Garniture de friction céramique réalisée à partir d'une matière constituée essentiellement d'oxydes métalliques, les oxydes métalliques se présentant sous la forme d'une céramique frittée ou sous la forme de particules de céramique, qui sont liées grâce à du carbone et/ou du carbure, **caractérisée en ce que** la matière comprend une proportion en masse d'au moins 50 % d'oxydes métalliques, et **en ce que** la structure cristalline des oxydes métalliques est un réseau lamellaire.

2. Garniture de friction céramique selon la revendication 1, **caractérisée en ce que** les oxydes métalliques sont choisis parmi les oxydes d'au moins l'un des métaux du groupe Ti, Zr, Al, B, Si, Ca et Mg.

3. Garniture de friction céramique selon la revendication 1, **caractérisée en ce que** les oxydes métalliques sont choisis entre les aluminosilicates de magnésium, le talc et l'oxyde de magnésium.

4. Garniture de friction céramique selon la revendication 1, **caractérisée en ce qu'**elle présente une proportion en masse d'au moins 50 % d'oxyde de magnésium.

5. Garniture de friction céramique selon la revendication 4, **caractérisée en ce que** l'oxyde de magnésium est lié grâce à du carbone ou du carbure.

6. Garniture de friction céramique selon la revendication 1, **caractérisée en ce qu'**elle contient des carbures des métaux du groupe Si, Ti, Fe, Ni et Cr, individuellement ou combinés.

7. Garniture de friction céramique selon la revendication 6, **caractérisée en ce qu'**elle contient du carbure de silicium.

8. Garniture de friction céramique selon la revendication 1, **caractérisée en ce que** d'autres additifs sont choisis parmi les liants inorganiques, modificateurs de coefficient de friction, agents de friction et lubrifiants, sachant que la somme des proportions en masse des additifs dans les matières est inférieure à 50 %.

9. Garniture de friction céramique selon la revendication 1, **caractérisée en ce que** les matières contiennent des fibres ou des trichites résistantes à la température selon une proportion en volume allant jusqu'à 35 %.

10. Garniture de friction céramique selon la revendication 9, **caractérisée en ce que** les fibres sont choisies entre les fibres aramides, fibres acryliques, fibres cellulosiques, fibres de carbone et fibres métalliques d'acier, de cuivre ou de leurs alliages.

11. Garniture de friction céramique selon la revendication 10, **caractérisée en ce que** les matières présentent une proportion en masse de 10 % à 30 % de fibres de carbone.

12. Garniture de friction céramique selon la revendication 8, **caractérisée en ce que** les modificateurs de coefficient de friction sont choisis entre le cuivre, étain, antimoine, sulfure de manganèse(II), trioxyde d'antimoine et oxyde d'étain(II).

13. Garniture de friction céramique selon la revendication 8, **caractérisée en ce que** les agents de friction sont choisis entre l'oxyde d'aluminium, le dioxyde de zirconium, le zirconium (ZrSiO₄), le carbure de silicium et le dioxyde de silicium.

14. Garniture de friction céramique selon la revendication 8, **caractérisée en ce que** les lubrifiants sont choisis entre le disulfure de molybdène, le graphite et le nitrure de bore.

15. Garniture de friction céramique selon la revendication 1, **caractérisée en ce qu'**elle contient des mélanges de carbone, cuivre ou étain.

16. Système de friction pouvant être fortement sollicité au niveau thermique, comportant une garniture de friction selon la revendication 1 et des corps de friction réalisés à partir de matières céramiques.

17. Système de friction selon la revendication 16, **caractérisé en ce que** les corps de friction contiennent des substances C/SiC ou C/C-SiC.

18. Utilisation de systèmes de friction selon la revendication 16 sous la forme de systèmes de freinage.

19. Utilisation de systèmes de friction selon la revendication 17 sous la forme de systèmes de freinage.

20. Utilisation de systèmes de friction selon la revendication 16 sous la forme de systèmes d'accouplement.

21. Utilisation de systèmes de friction selon la revendication 17 sous la forme de systèmes d'accouplement.

22. Utilisation selon la revendication 18 dans des véhicules ferroviaires, aéronefs ou véhicules automobiles.

23. Utilisation selon la revendication 19 dans des véhicules automobiles.

24. Procédé permettant de fabriquer des garnitures de friction selon la revendication 1, **caractérisé en ce que** :
- dans une première étape, un mélange apte au formage constitué d'oxydes métalliques pulvérulents, qui sont cristallisés dans la structure de réseau lamellaire, sont produits à l'aide d'additifs et de liants organiques durcissant à la chaleur ;
- dans une deuxième étape, le mélange est amené à adopter la forme souhaitée grâce à une compression et
- dans une troisième étape, le mélange ainsi formé est durci à l'aide des liants organiques durcissant à la chaleur et
- dans une quatrième étape, le corps vert ainsi produit est carbonisé à des températures supérieures à 650°C et à l'exclusion de l'oxygène atmosphérique.

25. Procédé selon la revendication 24, **caractérisé en ce que**, au mélange apte au formage, sont ajoutés des métaux choisis dans le groupe Si, Ti, Fe, Ni et Cr, sachant que ceux-ci forment, dans la quatrième étape, des carbures avec le carbone produit lors de la carbonisation.

26. Procédé selon la revendication 25, **caractérisé en ce que** les métaux sont utilisés en une quantité telle que la somme des proportions en masse du carbone et des carbures dans la matière formant la garniture de friction se trouve dans la plage de 5 % à 50%.

27. Procédé permettant de fabriquer des garnitures de friction selon la revendication 1, caractérisant en ce que :
- dans une première étape, un mélange apte au formage constitué d'oxydes métalliques pulvérulents, d'additifs et le cas échéant de plastifiants organiques est produit,
- dans une deuxième étape, le mélange est amené à adapter la forme souhaitée sous l'effet d'une compression et
- dans une troisième étape, le mélange formé est fritté à des températures allant d'environ 1 000°C à environ 1 500°C, le cas échéant sous pression.
